# EUROPÄISCHE PATENTSCHRIFT

(11) **EP 1 870 688 B1**
(45) Veröffentlichungstag und Bekanntmachung des Hinweises auf die Patenterteilung: **18.04.2018**
(21) Anmeldenummer: 07010545.7
(22) Anmeldetag: 26.05.2007
(51) Int. Cl.: B60R 21/0136, G01L 27/00, B60R 21/01

(54) **Verfahren zur Funktionsprüfung eines Druckaufnehmers**
Method for a functional test of a pressure pick-up
Procédé de vérification du fonctionnement d'un capteur de pression

(30) Priorität: 22.06.2006 DE 102006028583
(43) Veröffentlichungstag der Anmeldung: 26.12.2007
(73) Patentinhaber: Bayerische Motoren Werke Aktiengesellschaft, 80809 München (DE)
(72) Erfinder: Bauer, Richard, 85276 Pfassenhofen (DE); Muhr, Stephan, 80997 München (DE)

(56) Entgegenhaltungen:
- EP-A- 1 114 757
- WO-A-2005/012924
- DE-A1- 10 347 788
- DE-A1-102004 033 956
- DE-C1- 19 647 408

## Beschreibung

Die Erfindung betrifft ein Verfahren zur Funktionsprüfung eines Druckaufnehmers, welcher in einem Kraftfahrzeug zur Bestimmung einer Druckveränderung infolge eines Zusammenstoßes des Kraftfahrzeugs mit einem Hindernis vorgesehen ist und welcher zumindest ein elektrisches Ausgangssignal liefert.

Bei heutigen Sicherheitssystemen, insbesondere Airbag-Systemen, in Kraftfahrzeugen werden zum Zweck der Situationsbestimmung, insbesondere zur Erkennung eines Aufpralls, typischerweise verschiedene Messgrößen erfasst. Neben der Nutzung von Beschleunigungsaufnehmern ist es insbesondere bekannt, Druckaufnehmer zu verwenden. Solche Druckaufnehmer werden vorzugsweise im Inneren einer oder mehrerer Fahrzeugtüren angeordnet. Verbreitete Verwendung finden vor allem Differenz- bzw. Relativdruckaufnehmer. Ein Beispiel für einen solchen Druckaufnehmer beschreibt die DE 19647408 C1.

Um Risiken infolge eines unbemerkten Ausfalls oder einer unbemerkten Fehlfunktion eines solchen Druckaufnehmers zu vermeiden, ist eine Funktionsprüfung wünschenswert. Ein Ausfall oder eine Fehlfunktion eines Druckaufnehmers kann insbesondere dadurch verursacht werden, dass eine Ausgleichsöffnung - beispielsweise durch Wasser - verstopft ist. Eine Funktionsprüfung, welche ausschließlich die elektronische Funktionskette - also die Verarbeitung eines elektrischen Ausgangssignals eines solchen Druckaufnehmers - betrifft, kann solche Ausfälle oder Fehlfunktionen nicht aufdecken und ist daher unzureichend.

Durch eine bloße redundante Systemauslegung, d.h. den Vergleich der Ausgangssignale mehrerer unter zumindest ähnlichen Bedingungen betriebener Druckaufnehmer können mangels geeigneter Prüf-Stimuli in der Regel nur bestimmte Fehlerarten festgestellt werden. Die gezielte Erzeugung geeigneter Prüf-Stimuli ist bei nicht frei zugänglich verbauten Druckaufnehmern selbst unter Prüfstandsbedingungen sehr aufwändig. Zudem kann eine Funktionsprüfung unter Prüfstandsbedingungen in der Regel nur in großen Zeitabständen (beispielsweise nur bei Werkstattaufenthalten) erfolgen.

Die DE 10 2004 033 956 A1 beschreibt ein Verfahren zur Funktionsprüfung eines Druckaufnehmers, welches einen in eine Kraftfahrzeugtür eingebauten Lautsprecher nutzt, um definierte Prüf-Stimuli für einen in einem Hohlraum der Kraftfahrzeugtür angeordneten Druckaufnehmer zu erzeugen.

Aufgabe der Erfindung ist es, ein einfaches Verfahren zur Funktionsprüfung eines Druckaufnehmers zu schaffen, welches keine gesonderte Erzeugung von Prüf-Stimuli erfordert. Diese Aufgabe wird erfindungsgemäß gelöst durch ein Verfahren gemäß Patentanspruch 1. Bevorzugte Ausführungsformen und vorteilhafte Weiterbildungen ergeben sich aus den abhängigen Patentansprüchen.

Durch die Erfindung wird ein einfaches und mit geringem Aufwand durchführbares Verfahren zur Funktionsprüfung eines Druckaufnehmers geschaffen. Der Aufwand ist insbesondere deshalb so gering, weil keine dedizierte Erzeugung von Prüf-Stimuli erforderlich ist. Stattdessen werden für die erfindungsgemäße Funktionsprüfung Stimuli - insbesondere Druckschwankungen - ausgenutzt, die infolge eines ohnehin bei der bestimmungsgemäßen Nutzung des Kraftfahrzeugs auftretenden Prüfereignisses auf den Druckaufnehmer aufgebracht werden. Die Erfindung beruht also auf der Erkenntnis, dass solche Stimuli für eine Funktionsprüfung nutzbar sind und daher auf eine gesonderte Erzeugung von Prüf-Stimuli verzichtet werden kann.

Eine bevorzugte Ausführungsform der Erfindung betrifft den Fall, dass der Druckaufnehmer in einer Tür oder Klappe des Kraftfahrzeugs angeordnet ist. Dann stellt ein bevorzugtes Prüfereignis im Sinne der Erfindung das Zuschlagen dieser Tür bzw. Klappe dar. Insbesondere ein Zuschlagen der Fahrertür und/oder Beifahrertür tritt bei der bestimmungsgemäßen Nutzung des Kraftfahrzeugs regelmäßig auf. Ein solches Zuschlagen einer Fahrzeugtür führt zu Stimuli auf einen in der Fahrzeugtür angeordneten Druckaufnehmer. Die erfindungsgemäße Funktionsprüfung kann somit regelmäßig stattfinden.

Das Zuschlagen einer Tür oder Klappe des Kraftfahrzeugs kann aber auch ein geeignetes Prüfereignis für die erfindungsgemäße Funktionsprüfung eines Druckaufnehmers darstellen, der nicht in derselben Tür bzw. Klappe angeordnet ist, sondern in einer anderen Tür bzw. Klappe oder an anderer Stelle in Fahrzeug. Durch das Zuschlagen der Tür bzw. Klappe kann der Druck im Fahrzeuginneren nämlich so stark verändert werden, dass sich signifikante Druckschwankungen auch an solchen Stellen ergeben - nicht nur in der zugeschlagenen Tür bzw. Klappe selbst. Auch solche Druckschwankungen sind als Prüf-Stimuli für die erfindungsgemäße Funktionsprüfung nutzbar.

Ein einziges Prüfereignis kann auch für die erfindungsgemäße Funktionsprüfung mehrerer, räumlich im Kraftfahrzeug verteilter Druckaufnehmer ausgenutzt werden.

Erfindungsgemäß wird im zeitlichen Umfeld eines Prüfereignisses das Ausgangssignal des Druckaufnehmers zumindest teilweise erfasst. Vorzugsweise wird das Ausgangssignal des Druckaufnehmers vollständig bzw. mit hoher zeitlicher Abtastrate erfasst. Je nach Ausführungsform der Erfindung kann jedoch auch eine eingeschränkte Erfassung für die anschließende Verarbeitung ausreichen.

Zur Bewertung der Funktionsfähigkeit des Druckaufnehmers werden zumindest charakteristische Größen seines Ausgangssignals mit charakteristischen Größen eines Referenzsignals verglichen. Sofern ausreichende Ressourcen verfügbar sind, erfolgt vorzugsweise ein umfassender Vergleich des Ausgangssignals mit dem Referenzsignal. Ein solcher umfassender Vergleich kann qualitative und/oder quantitative Aspekte des Ausgangssignals bzw. des Referenzsignals betreffen. Je nach Art des Druckaufnehmers, Anbringungsort, Art und Intensität des Prüfereignisses sowie geforderter Genauigkeit können jedoch auch basierend auf Bestimmung und Vergleich lediglich charakteristischer Größen (beispielsweise Minimal-/Maximalwert) des Ausgangssignals und/oder des Referenzsignals zuverlässige Aussagen über die Funktionsfähigkeit des Druckaufnehmers getroffen werden. Somit kann aus dem Ergebnis des Vergleichs ein die Funktionsfähigkeit des Druckaufnehmers betreffender Status abgeleitet werden.

Abhängig von dem erfindungsgemäß abgeleiteten Status können geeignete Folge- bzw. Abhilfemaßnahmen eingeleitet werden. Der Status kann beispielsweise dem Fahrer des Kraftfahrzeugs in Gestalt einer Warnmeldung mitgeteilt werden und/oder es kann ein Fehlereintrag in einem Fehlerspeicher vorgenommen werden. Es kann auch bezüglich einer Funktion, an welcher der nicht funktionsfähige Druckaufnehmer planmäßig beteiligt ist, auf eine Ersatzstrategie umgeschaltet werden.

Vorzugsweise wird als Referenzsignal das Ausgangssignal eines zweiten in dem Kraftfahrzeug vorgesehenen Druckaufnehmers verwendet. Beispielsweise kann das Ausgangssignal eines zweiten in derselben Tür bzw. Klappe des Kraftfahrzeugs angeordneten Druckaufnehmers als Referenzsignal bei der erfindungsgemäßen Funktionsprüfung dienen. In einem solchen Fall kann zudem auch das Ausgangssignal des erfindungsgemäß funktionsgeprüften Druckaufnehmers als Referenzsignal für eine Funktionsprüfung des zweiten Druckaufnehmers dienen. Der durch diese bevorzugte Ausführungsform der Erfindung ermöglichte Vergleich der Ausgangssignale zweier durch ein Prüfereignis stimulierter Druckaufnehmer erlaubt eine deutlich verbesserte Funktionsprüfung gegenüber einem Vergleich der Ausgangssignale zweier nicht stimulierter Druckaufnehmer.

Der im vorherigen Absatz beschriebene Vergleich der Ausgangssignale zweier Druckaufnehmer kann auch dann vorteilhaft sein, wenn die beiden Druckaufnehmer nicht in derselben Tür bzw. Klappe des Kraftfahrzeugs angeordnet sind. Gegebenfalls kann bei dem Vergleich berücksichtigt werden, dass die durch das Prüfereignis erzeugten Prüf-Stimuli bei einem der beiden Druckaufnehmer bedingt durch seinen Anbringungsort verzögert und/oder abgeschwächt ankommt. Auch weitere Effekte, wie etwa eine Reflexion, können bei entsprechend detaillierter Auswertung berücksichtigt werden. Dies kann durch eine entsprechende Transformationsfunktion geschehen. Gemäß einer bevorzugten Ausführungsform der Erfindung wird also bei dem Vergleich auf die zumindest charakteristischen Größen des Ausgangssignal zumindest eines der beiden Druckaufnehmer eine vom Anbringungsort des Druckaufnehmers abhängige Transformationsfunktion angewendet.

Alternativ oder zusätzlich zur Verwendung des Ausgangssignals eines zweiten Druckaufnehmers als Referenzsignal kann als Referenzsignal auch ein anderweitig erfasstes oder erzeugtes Signal dienen bzw. es können als charakteristische Größen eines Referenzsignals auch anderweitig erfasste oder erzeugte charakteristische Größen eines Signals dienen. Beispielsweise kann ein unter Idealbedingungen gemessenes oder unter der Voraussetzung von Idealbedingungen simulativ gewonnenes Referenzsignal Verwendung finden. Es können aber beispielsweise auch charakteristische Größen Verwendung finden, welche eine gerade noch ausreichende Funktionsfähigkeit des Druckaufnehmers charakterisieren.

Die Erfindung erfordert die zumindest teilweise Erfassung des Ausgangssignal des Druckaufnehmers im zeitlichen Umfeld eines Prüfereignisses. Dies kann auf unterschiedliche Art und Weise erfolgen. Im Folgenden wird ohne Beschränkung der Allgemeinheit davon ausgegangen, dass das Ausgangssignal als solches erfasst wird und nicht lediglich charakteristische Größen desselben.

Vorzugsweise wird das Prüfereignis durch von dem Druckaufnehmer unterschiedliche Detektionsmittel detektiert und die Erfassung des Ausgangssignals des Druckaufnehmers und/oder der anschließende Vergleich wird durch die Detektion des Prüfereignisses ausgelöst.

Beispielsweise kann das Zuschlagen einer Fahrzeugtür durch einen Türschloss-Sensor detektiert werden. Das Signal des Türschloss-Sensors kann dann verwendet werden, um die Erfassung des Ausgangssignals des Druckaufnehmers und/oder den anschließenden Vergleich auszulösen.

Vorzugsweise erfolgt die Erfassung des Ausgangssignals in einem begrenzten Zeitfenster.

Vorzugsweise beginnt ein solches Zeitfenster frühestens mit der Detektion des Prüfereignisses.

Vorzugsweise wird ein Zeitfenster, in welchem das Ausgangssignal des Druckaufnehmers zumindest teilweise erfasst wird, in Abhängigkeit vom Anbringungsort des Druckaufnehmers gewählt. Im dem Fall, dass das Prüfereignis im Zuschlagen einer Fahrzeugtür besteht, führen die dadurch entstehenden Druckschwankungen sehr bald zu Veränderungen des Ausgangssignals eines in dieser Fahrzeugtür angeordneten Druckaufnehmers und erst zeitlich versetzt zu Veränderungen des Ausgangssignals eines an anderer Stelle angeordneten Druckaufnehmers. Durch einen entsprechenden zeitlichen Versatz kann die Erfassung bzw. Auswertung jeweils auf den geeigneten Zeitraum bezogen erfolgen.

Vorzugsweise wird zur Detektion des Prüfereignisses ein von dem Druckaufnehmer unterschiedlicher Sensor verwendet, welcher ohnehin für andere Zwecke im Kraftfahrzeug vorgesehen ist und nicht eigens für die Erfindung bereitgestellt werden muss. Im dem Fall, dass das Prüfereignis im Zuschlagen einer Fahrzeugtür besteht, kann statt eines Türschloss-Sensors auch ein nahe der Fahrzeugtür angeordneter Beschleunigungssensor zuverlässig die Erschütterungen detektieren, die durch das Zuschlagen der Fahrzeugtür verursacht werden. Sowohl ein solcher Beschleunigungssensor als auch ein Türschloss-Sensor sind in der Regel ohnehin für andere Zwecke im Kraftfahrzeug vorgesehen und müssen nicht eigens für die Erfindung bereitgestellt werden.

Da eine Veränderung des Ausgangssignals des Druckaufnehmers auf bestimmte Prüfereignisse verzögert folgt und/oder über einen verhältnismäßig langen Zeitraum anhält, kann es ausreichen, das Ausgangsignal lediglich zeitlich nach der Detektion des Prüfereignisses zu erfassen bzw. auszuwerten. Es kann jedoch vorteilhaft sein, auch Werte des Ausgangsignals auszuwerten, die zeitlich vor der Detektion des Prüfereignisses aufgetreten sind. Hierzu können zumindest charakteristische Größen des Ausgangssignals des Druckaufnehmers laufend in einem Zwischenspeicher zwischengespeichert werden. Die erfindungsgemäß zum Vergleich mit den zumindest charakteristischen Größen des Referenzsignals herangezogenen zumindest charakteristischen Größen des Ausgangssignals können dann zumindest teilweise dem Zwischenspeicher entnommen werden. Bei Verwendung beispielsweise eines Ringpuffers, in welchem alte Werte laufend durch neue ersetzt werden, kann eine Zwischenspeicherung über einen begrenzten Zeitraum (realistisch für die Zeitspanne zwischen der Detektion des Prüfereignisses "Zuschlagen der Fahrzeugtür" und dessen Detektion sind etwa 5 bis 100 Millisekunden) mit sehr geringem Speicherplatz erfolgen.

Die Erfindung ist besonders vorteilhaft anwendbar, wenn das Prüfereignis durch gesonderte Detektionsmittel detektierbar ist und innerhalb eines kurzen Zeitraums, z.B. innerhalb weniger als einer Sekunde, zu signifikanten Veränderungen des Ausgangssignals des Druckaufnehmers führt. Dies ist beispielsweise beim Zuschlagen einer Fahrzeugtür gegeben. Alternativ oder zusätzlich zur erfindungsgemäßen Funktionsprüfung anhand der durch ein Prüfereignis wie das Zuschlagen einer Fahrzeugtür erzeugten Prüf-Stimuli kann aber auch eine Funktionsprüfung anhand von durch weniger dynamische Einflüsse erzeugten Prüf-Stimuli vorgenommen werden. Beispielsweise kann sich während der Benutzung des Kraftfahrzeugs der Luftdruck im Fahrzeuginneren durch atmosphärische Luftdruckveränderungen (Wetter) und/oder durch Höhenunterschiede (Fahrt über Gebirgs-Pass) geringfügig verändern. Auch während solcher Luftdruckveränderungen können die Ausgangssignale verschiedener im Kraftfahrzeug angebrachter Druckaufnehmer erfasst und verglichen werden.

Anhand der beigefügten Zeichnungen wird im Folgenden ein Ausführungsbeispiel für die Erfindung beschrieben, welches weitere vorteilhafte Ausführungsformen und Weiterbildungen der Erfindung aufzeigt. Dabei zeigt
- Fig. 1: schematisch mögliche Anbringungsorte eines Druckaufnehmers sowie eines zur Detektion eines Prüfereignisses geeigneten Beschleunigungsaufnehmers bei einer bevorzugten Ausführungsform des erfindungsgemäßen Verfahrens und
- Fig. 2: qualitativ die zeitlichen Verhältnisse bei einer bevorzugten Ausführungsform des erfindungsgemäßen Verfahrens.

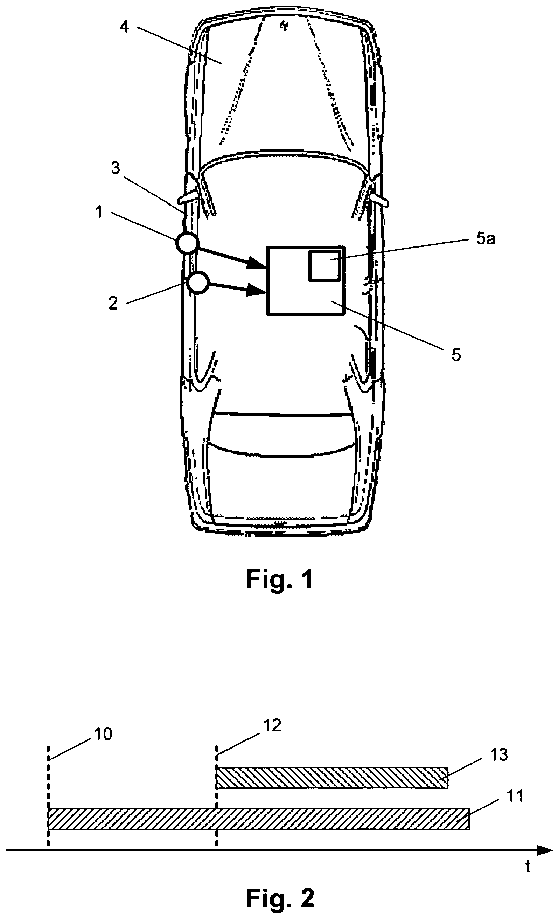

In Fig. 1 werden schematisch mögliche Anbringungsorte eines Druckaufnehmers 1 sowie eines zur Detektion eines Prüfereignisses - hier dem Zuschlagen einer Fahrzeugtür 3 eines Kraftfahrzeugs 4 - geeigneten Beschleunigungsaufnehmers 2 bei einer bevorzugten Ausführungsform des erfindungsgemäßen Verfahrens gezeigt.

Sowohl der Druckaufnehmer 1 als auch der Beschleunigungsaufnehmer 2 sind Bestandteile eines Systems zur Auslösung von Schutzmaßnahmen für die Insassen des Kraftfahrzeugs 4. Durch das System zur Auslösung von Schutzmaßnahmen sind Art und Schwere einer Kollision des Kraftfahrzeugs 4 feststellbar. Dabei finden Verfahren Anwendung, welche an sich aus dem Stand der Technik bekannt sind.

Der Druckaufnehmer 1 ist in der Fahrzeugtür 3 angeordnet, der Beschleunigungsaufnehmers 2 in der dahinterliegenden B-Säule des Kraftfahrzeugs 4.

Fig. 1 zeigt den Fall, dass die Fahrzeugtür 3 die Fahrertür ist. Die Erfindung ist selbstverständlich auch auf den Fall einer Beifahrertür, einer Heckklappe oder mehrerer Türen bzw. Klappen eines Kraftfahrzeugs anwendbar.

Jeder der beiden Aufnehmer liefert ein Ausgangssignal. Die beiden Ausgangssignale - das des Druckaufnehmers 1 sowie das des Beschleunigungsaufnehmers 2 - werden zum Zweck der Bestimmung der Art und Schwere einer Kollision des Kraftfahrzeugs 4 laufend durch eine Auswerteeinheit 5 erfasst und ausgewertet. Zumindest eine Schutzeinrichtung 6 des Kraftfahrzeugs 4, beispielsweise ein Gassack (Airbag), kann durch die Auswerteeinheit 5 entsprechend der bestimmten Art und Schwere einer Kollision angesteuert werden.

Zur Funktionsprüfung des Druckaufnehmers 1 wird ein Verfahren gemäß einer bevorzugten Ausführungsform der Erfindung angewendet. Dabei wird das Ansprechen des Druckaufnehmers 1 auf ein Zuschlagen der Fahrzeugtür 3 ausgewertet.

Hierzu wird das Ausgangssignal des Druckaufnehmers 1 in einem Zeitfenster von ca. 50 Millisekunden beginnend mit der Detektion des Zuschlagens der Fahrzeugtür 3 erfasst und mit einem Referenzsignal verglichen.

Die Erfassung des Ausgangssignals muss nicht eigens durch die Detektion des Prüfereignisses (Zuschlagen der Fahrzeugtür 3) angestoßen werden. Sie erfolgt ohnehin laufend für die Zwecke des oben genannten Systems zur Auslösung von Schutzmaßnahmen. Durch die Detektion des Prüfereignisses wird lediglich festgelegt, welcher zeitliche Ausschnitt des Ausgangssignals des Druckaufnehmers 1 zum Vergleich mit dem Referenzsignal herangezogen wird.

Als Referenzsignal dient ein in ausreichender Abtastrate in einer Speichereinheit 5a der Auswerteeinheit 5 abgespeichertes früheres Ausgangssignal des Druckaufnehmers 1, welches vorab in einem Kalibrierungsvorgang unter Idealbedingungen aufgenommen wurde. Durch eine Wiederholung des Kalibrierungsvorgangs kann das in der Speichereinheit 5a abgespeicherte Referenzsignal auch nachträglich durch ein neu aufgenommenes Signal ersetzt werden.

Der Vergleich zwischen Ausgangssignal und Referenzsignal wird durch die Auswerteeinheit 5 vorgenommen, welche für die Zwecke des oben genannten Systems zur Auslösung von Schutzmaßnahmen ohnehin mit einer hierfür geeigneten Recheneinheit ausgerüstet ist. Als Ergebnis des Vergleichs wird ein die Funktionsfähigkeit des Druckaufnehmers 1 betreffender Status abgeleitet. Ein eventuell negativer Status wird als Fehlereintrag bei der Auswerteeinheit 5 abgelegt und führt zur Ausgabe einer Warnmeldung an den Fahrer des Kraftfahrzeugs 4.

Das Zuschlagen der Fahrzeugtür 3 stellt ein Prüfereignis im Sinne der Erfindung dar, welches bei der bestimmungsgemäßen Nutzung des Kraftfahrzeugs regelmäßig auftritt. Das Zuschlagen der Fahrzeugtür 3 führt dazu, dass Stimuli - nämlich Druckschwankungen - auf den in der Fahrzeugtür 3 angeordneten Druckaufnehmer 1 aufgebracht werden, ohne dass diese gesondert erzeugt werden müssten. Die Druckschwankungen führen typischerweise über einen Zeitraum von ca. 50 bis 100 Millisekunden hinweg zu signifikanten Veränderungen des Ausgangssignals des Druckaufnehmers 1.

Entscheidend für den Erfolg der beschriebenen Variante der Erfindung ist die Erkennung des Prüfereignisses anhand der Signale des Beschleunigungsaufnehmers 3. Durch das Zuschlagen der Fahrzeugtür 3 treten Erschütterungen der B-Säule des Kraftfahrzeugs 4 auf. Diese Erschütterungen führen bereits nach wenigen Millisekunden zu einer deutlichen Veränderung des Ausgangssignal des Beschleunigungsaufnehmers 2. Anhand dieser deutlichen Veränderung des Ausgangssignals des Beschleunigungsaufnehmers 2 ist für die Auswerteeinheit 5 - beispielsweise durch einen konventionellen Signalmustervergleich unter Nutzung eines Mustersignals - das Prüfereignis "Zuschlagen der Fahrzeugtür" erkennbar.

Da das Zuschlagen der Fahrzugtür 3 auf diese Weise sehr schnell (beispielsweise nach ca. 30 Millisekunden) durch die Auswerteeinheit erkannt werden kann, genügt es, den Zeitpunkt der Detektion des Zuschlagens der Fahrzeugtür 3 als Beginn des zeitlichen Ausschnitts des Ausgangssignals des Druckaufnehmers 1 festzulegen, der zum Vergleich mit dem Referenzsignal herangezogen wird.

Fig. 2 verdeutlicht qualitativ die zeitlichen Verhältnisse aufgetragen über einer Zeitachse t. Die senkrechte Strichlinie 10 kennzeichnet den Zeitpunkt des ersten Kontakts der Fahrzeugtür 3 mit dem Türrahmen beim Zuschlagen der Fahrzeugtür 3. Der Balken 11 kennzeichnet den Zeitraum, in welchem hieraus eine signifikante Veränderungen des Ausgangssignals des Druckaufnehmers 1 vorliegt. Die senkrechte Strichlinie 12 kennzeichnet den Zeitpunkt der Detektion des Prüfereignisses "Zuschlagen der Fahrzeugtür". Fig. 2 verdeutlicht, dass nach der Detektion des Prüfereignisses eine ausreichendes Zeitfenster mit signifikant verändertem Ausgangssignals des Druckaufnehmers 1 für den erfindungsgemäß vorgesehenen Vergleich mit dem Referenzsignal 11 zur Verfügung steht. Typischerweise liegen die Signalspitzen der auf das Zuschlagen der Fahrzeugtür 3 folgenden Veränderungen des Ausgangssignals des Druckaufnehmers 1 in dem Zeitraum nach der Detektion des Prüfereignisses. Balken 13 kennzeichnet den zeitlichen Ausschnitt des Ausgangssignals des Druckaufnehmers 1, der für den Vergleich mit dem Referenzsignal herangezogen wird.

Durch laufende Zwischenspeicherung des Ausgangssignals des Druckaufnehmers 1 in einem Zwischenspeicher, etwa einem Ringpuffer, könnte zudem sogar eine Auswertung des Ausgangssignals im gesamten durch den Balken 11 gekennzeichneten Zeitraum ermöglicht werden.

## Patentansprüche

1. Verfahren zur Funktionsprüfung eines Druckaufnehmers, welcher in einem Kraftfahrzeug zur Bestimmung einer Druckveränderung infolge eines Zusammenstoßes des Kraftfahrzeugs mit einem Hindernis vorgesehen ist und welcher zumindest ein elektrisches Ausgangssignal liefert,
**dadurch gekennzeichnet,**
**dass** im zeitlichen Umfeld eines Prüfereignisses, welches bei der bestimmungsgemäßen Nutzung des Kraftfahrzeugs ohnehin auftritt und durch welches Prüf-Stimuli auf den Druckaufnehmer aufgebracht werden, das Ausgangssignal des Druckaufnehmers zumindest teilweise erfasst wird,
**dass** zumindest charakteristische Größen des Ausgangssignals mit charakteristischen Größen eines Referenzsignals verglichen werden und
**dass** aus dem Ergebnis des Vergleichs ein die Funktionsfähigkeit des Druckaufnehmers betreffender Status abgeleitet wird.

2. Verfahren nach Anspruch 1, **dadurch gekennzeichnet,**
**dass** der Druckaufnehmer in einer Tür oder Klappe des Kraftfahrzeugs angeordnet ist und dass das Prüfereignis im Zuschlagen der Tür bzw. Klappe besteht.

3. Verfahren nach Anspruch 1 oder 2, **dadurch gekennzeichnet,**
**dass** als Referenzsignal das Ausgangssignal eines zweiten in dem Kraftfahrzeug vorgesehenen Druckaufnehmers verwendet wird.

4. Verfahren nach Anspruch 3, **dadurch gekennzeichnet,**
**dass** bei dem Vergleich auf die zumindest charakteristischen Größen des Ausgangssignal zumindest eines der beiden Druckaufnehmer eine vom Anbringungsort des Druckaufnehmers abhängige Transformationsfunktion angewendet wird.

5. Verfahren nach einem der Ansprüche 1 bis 4, **dadurch gekennzeichnet,**
**dass** das Prüfereignis durch von dem Druckaufnehmer unterschiedliche Detektionsmittel detektiert wird und
**dass** die Erfassung des Ausgangssignals des Druckaufnehmers und/oder der Vergleich durch die Detektion des Prüfereignisses ausgelöst wird.

6. Verfahren nach Anspruch 5, **dadurch gekennzeichnet,**
**dass** die Erfassung des Ausgangssignals in einem begrenzten Zeitfenster erfolgt.

7. Verfahren nach Anspruch 6, **dadurch gekennzeichnet,**
**dass** das Zeitfenster frühestens mit der Detektion des Prüfereignisses beginnt.

8. Verfahren nach Anspruch 6 oder 7, **dadurch gekennzeichnet,**
**dass** das Zeitfenster in Abhängigkeit vom Anbringungsort des Druckaufnehmers gewählt wird.

9. Verfahren nach einem der Ansprüche 1 bis 8, **dadurch gekennzeichnet,**
**dass** zumindest charakteristische Größen des Ausgangssignals des Druckaufnehmers laufend in einem Zwischenspeicher zwischengespeichert werden und
**dass** die zum Vergleich mit den zumindest charakteristischen Größen des Referenzsignals herangezogenen zumindest charakteristischen Größen des Ausgangssignals zumindest teilweise dem Zwischenspeicher entnommen werden.

## Claims

1. A method for the functional test of a pressure pick-up, which is provided in a motor vehicle in order to determine a pressure change resulting from a collision of the motor vehicle with an obstacle and which provides at least one electrical output signal, **characterised in that**
around the time of a test event, which occurs anyway with intended use of the motor vehicle and by means of which test stimuli are applied to the pressure pick-up, the output signal of the pressure pick-up is recorded at least in part,
**in that** at least characteristic variables of the output signal are compared with characteristic variables of a reference signal, and **in that** a status relating to the functional capability of the pressure pick-up is derived from the result of the comparison.

2. A method according to claim 1, **characterised in that** the pressure pick-up is arranged in a door or cover panel of the motor vehicle, and **in that** the test event comprises the closing of the door or cover panel.

3. A method according to claim 1 or 2, **characterised in that** the output signal of a second pressure pick-up provided in the motor vehicle is used as reference signal.

4. A method according to claim 3, **characterised in that**, when the comparison is performed, a transformation function dependent on the place of installation of the pressure pick-up is applied to the at least characteristic variables of the output signal of at least one of the two pressure pick-ups.

5. A method according to any one of claims 1 to 4, **characterised in that** the test event is detected by detection means different from the pressure pick-up, and
**in that** the recording of the output signal of the pressure pick-up and/orthe comparison are/is triggered by the detection of the test event.

6. A method according to claim 5, **characterised in that** the output signal is recorded within a limited time window.

7. A method according to claim 6, **characterised in that** the time window starts at the earliest with the detection of the test event.

8. A method according to claim 6 or 7, **characterised in that** the time window is selected depending on the place of installation of the pressure pick-up.

9. A method according to any one of claims 1 to 8, **characterised in that** at least characteristic variables of the output signal of the pressure pick-up are temporarily stored continuously in a temporary memory, and
**in that** the at least characteristic variables of the output signal used for the comparison with the at least characteristic variables of the reference signal are removed at least in part from the temporary memory.

## Revendications

1. Procédé de contrôle du fonctionnement d'un capteur de pression qui est monté dans un véhicule pour déterminer une modification de pression consécutive à une collision du véhicule avec un obstacle et qui fournit au moins un signal électrique de sortie,
**caractérisé en ce que**
dans l'environnement temporel d'un événement de contrôle qui survient de toute façon lors d'une utilisation conforme du véhicule et par lequel des stimuli de contrôle sont appliqués sur le capteur de pression, le signal de sortie du capteur de pression est détecté au moins partiellement,
des grandeurs au moins caractéristiques du signal de sortie sont comparées à des grandeurs caractéristiques d'un signal de référence, et
à partir du résultat de la comparaison on déduit un état concernant l'aptitude au fonctionnement du capteur de pression.

2. Procédé conforme à la revendication 1,
**caractérisé en ce que**
le capteur de pression est monté sur une porte ou un abattant du véhicule et l'événement de contrôle est constitué par une fermeture de la porte de l'abattant.

3. Procédé conforme à la revendication 1 ou 2,
**caractérisé en ce qu'**
en tant que signal de référence on utilise le signal de sortie d'un second capteur de pression monté dans le véhicule.

4. Procédé conforme à la revendication 3,
**caractérisé en ce que**
lors de la comparaison concernant les grandeurs au moins caractéristiques du signal de sortie d'au moins l'un des deux capteurs de pression, on utilise une fonction de transformation dépendant du lieu de montage du capteur de pression.

5. Procédé conforme à l'une des revendications 1 à 4,
**caractérisé en ce que**
l'événement de contrôle est détecté par des moyens de détection différents du capteur de pression, et
la détection du signal de sortie du capteur de pression et/ou la comparaison est(sont) déclenchée(s) par la détection de l'événement de contrôle.

6. Procédé conforme à la revendication 5,
**caractérisé en ce que**
la détection du signal de sortie est effectuée dans une fenêtre chronologique limitée.

7. Procédé conforme à la revendication 6,
**caractérisé en ce que**
la fenêtre chronologique commence au plus tôt par la détection de l'événement de contrôle.

8. Procédé conforme à la revendication 6 ou 7,
**caractérisé en ce que**
la fenêtre chronologique est sélectionnée en fonction du lieu de montage du capteur de pression.

9. Procédé conforme à l'une des revendications 1 à 8,
**caractérisé en ce que**
des grandeurs au moins caractéristiques du signal de sortie du capteur de pression sont enregistrées de manière intermédiaire en continu dans une mémoire intermédiaire et, les grandeurs au moins caractéristiques du signal de sortie prises en considération pour la comparaison avec les grandeurs au moins caractéristiques du signal de référence sont prélevées au moins partiellement dans la mémoire intermédiaire.
